# EUROPEAN PATENT APPLICATION

(11) **EP 3 647 501 A1**
(43) Date of publication of application: **06.05.2020**
(21) Application number: 18203908.1
(22) Date of filing: 01.11.2018
(51) Int. Cl.: E03B 5/00, F04D 7/04, F04D 13/00

(54) **PORTABLE PUMP STATION ARRANGEMENT**

(71) Applicant: Xylem Europe GmbH, 8200 Schaffhausen (CH)
(72) Inventor: WIKSTRÖM, Jan, 174 41 SUNDBYBERG (SE); BRATTHÄLL, Johan, 132 37 SALTSJÖ BOO (SE)
(74) Representative: Brann AB

(57) **Abstract**

The invention relates to a portable pump station arrangement for collecting and transporting water slurry, the portable pump station arrangement comprising a chassis configured to bear against the ground, a tank (3) supported by the chassis, an inlet conduit connected to the tank (3) and configured to lead water slurry into the tank (3), at least one discharge pump (5) arranged in the tank (3) and configured to transport the water slurry away from the tank (3), and an outlet pipe system (6) connected to the at least one discharge pump (5) and configured to lead the water slurry away from the tank (3). The portable pump station arrangement is characterized in that the tank (3) on a level with the upper end of the at least one discharge pump (5) has a first cross sectional area (A1) and that the tank (3) on a level with an inlet opening (10) of the at least one discharge pump (5) has a second cross sectional area (A2), wherein the ratio A1:A2 is equal to or greater than 1,4 and equal to or less than 20, and in that the vertical distance (Y) between the first cross sectional area (A1) and the second cross sectional area (A2) is equal to or greater than 0,05*C/π and equal to or less than 0,10*C/π, wherein C is equal to the circumference of the tank (3) at the first cross sectional area (A1).

## Description

### Technical field of the Invention

The present invention relates generally to the field of pump arrangements configured to pump water slurry, i.e. liquid comprising solid matter. Further, the present invention relates specifically to the field of pump arrangements especially configured for pumping water slurry comprising sand and stone material, such as drilling water in mining/tunneling applications or surface water on construction sites and quarries, i.e. dewatering applications at production sites.

The present invention is directed towards a portable pump station arrangement for collecting and transporting water slurry. The portable pump station arrangement comprises a chassis configured to bear against the ground, a tank supported by the chassis, an inlet conduit connected to the tank and configured to lead water slurry into the tank, at least one discharge pump arranged in the tank and configured to transport the water slurry away from the tank, and an outlet pipe system connected to the at least one discharge pump and configured to lead the water slurry away from the tank.

### Background of the Invention

In mines, tunneling, quarries, on construction sites, and the like applications, there is almost always a need to remove unwanted water in order to secure a dry enough environment at the working site, and also a need to transport the water slurry to a location where it is more economically and efficiently handled. In mining/tunneling/quarries applications a lot of drilling water is used when preparing for charging before blasting, and water is also used to prevent dust spreading after the blasting, and if the production water is not removed at least the location of the blast and the lower parts of the mine will become flooded. Surface water and groundwater will also add up to accumulation of unwanted water to be removed. It is customary to use drainage/dewatering pumps to lift the water out of the mine to a settling basin located above ground, and the water is lifted stepwise from the lower parts of the mine to different basins/pits located at different depths of the mine. Each step/lift may for instance be in the range 25-50 meters in the vertical direction, and the length of the outlet conduit, i.e. the transport distance, in each step/lift may for instance be in the range 100-300 meters. In mining applications a considerable amount of sand and stone material is suspended in the water, in some applications as much as 10%.

The most common method to remove the water slurry from the front of the mine gallery is to blast cavities/pits into the gallery wall close to the front, at connection points, or at the like locations. The water comprising sand/stone at the front of the mine gallery is removed by one or more first (smaller) dewater/drainage pump and pumped to the cavity/pit, or the water is allowed to automatically flow into the cavity/pit using gravity. A second (larger) dewatering/drainage pump is located in the cavity/pit and is arranged to pump the water to a second cavity located further up or at least closer to the mine opening, the pump in the second cavity pumps to a third cavity, the pump in the third cavity pumps to a forth cavity, etc. until the water slurry reaches a larger settling basin. The settling basin can be located in the mine or outside the mine. However, the dewatering pumps does usually not manage to remove all sand/stone from each cavity and every now and then a sludge truck needs to clean the cavity from sediment material, or the operators uses a front end loader to scoop out the sand/stone from the cavity. The use of sludge trucks is time consuming and costly. The use of a front end loader is really messy and very inefficient. If the sand/stone is not removed from the cavity the cavity will lose its volume capacity and the share of solids in the pumped water will increase and the pumps and hoses will become clogged/damaged. It is hard work, time consuming, costly and requires up to three operators to exchange a damaged pump in a cavity.

Thereto, the biggest problem is that the blasted cavities are stationary, i.e. the front of the mine gallery moves constantly and already when the cavity is ready to be used the location of the cavity is no longer optimal for its purpose.

In many production sites the removal of water is not in focus (it is necessary but no direct contribution to profit, on the contrary only a cost), since the focus is to remove ore (having direct contribution to profit). The operators are not interested in removing water, they only require that the water is removed otherwise they cannot remove ore.

### Object of the Invention

The present invention aims at obviating the aforementioned disadvantages and failings of previously known dewatering application for production sites, and at providing an improved portable pump station arrangement. A primary object of the present invention is to provide an improved portable pump station arrangement of the initially defined type that will simplify and secure removal of water slurry from the production site. It is another object of the present invention to provide a dewatering application for production sites that is configured to be used at an optimal location at all times, i.e. portable.

### Summary of the Invention

According to the invention at least the primary object is attained by means of the initially defined portable pump station arrangement having the features defined in the independent claim. Preferred embodiments of the present invention are further defined in the dependent claims.

According to the present invention, there is provided a portable pump station wherein the tank on a level with the upper end of the at least one discharge pump has a first cross sectional area (A1) and the tank on a level with an inlet opening of the at least one discharge pump has a second cross sectional area (A2), wherein the ratio A1:A2 is equal to or greater than 1,4 and equal to or less than 20, and in that the vertical distance (Y) between the first cross sectional area (A1) and the second cross sectional area (A2) is equal to or greater than 0,05*C/π and equal to or less than 0,10*C/π, wherein C is equal to the circumference of the tank at the first cross sectional area (A1).

Thus, the present invention is based on the idea that once you have lifted water slurry, i.e. water together with sand/stone, from the ground at a production site, the water slurry is not thrown back on the ground before it reaches a settling basin intended for separating the water and solid matter.

According to the present invention, the vertical distance between the first cross sectional area (A1) and the second cross sectional area (A2) is equal to or greater than [0,05*C/π] and equal to or less than [0,10*C/π]. The area decrease rate from the first cross sectional area (A1) to the second cross sectional area (A2) cannot be too high or too low but within the defined range in order to guide the solid matter in the water slurry towards the area located in close vicinity of the inlet opening of the discharge pump.

According to a preferred embodiment of the present invention, the ratio A1:A2 is equal to or greater than 3 and equal to or less than 10. It is important that the solid matter in the water slurry, when settling in the tank, is guided by the tank towards an area located in close vicinity of the inlet opening of the discharge pump.

According to a preferred embodiment of the present invention, an inlet pump is connected to the inlet conduit and is configured to lift the water slurry from the ground and pump the water slurry into the tank via the inlet conduit. The inlet pump is preferably constituted by a dewatering/drainage pump. The inlet pump is configured/dimensioned to be able to lift the specific water slurry from the ground at the specific production site.

According to a preferred embodiment the inlet opening of the at least one discharge pump is located straight above a bottom surface of the tank, wherein the vertical distance between the inlet opening and the bottom surface is equal to or greater than 30 millimeters and equal to or less than 250 millimeters. This range is optimal to prevent sedimentation of solid matter at the bottom of the tank.

Further advantages with and features of the invention will be apparent from the other dependent claims as well as from the following detailed description of preferred embodiments.

### Brief description of the drawings

A more complete understanding of the abovementioned and other features and advantages of the present invention will be apparent from the following detailed description of preferred embodiments in conjunction with the appended drawings, wherein:
- Fig 1: is a schematic illustration of a preferred embodiment of an inventive portable pump station arrangement located in a mine,
- Fig. 2: is a schematic illustration of the tank of the inventive portable pump station arrangement, and
- Fig. 3: is a schematic illustration of a preferred embodiment of the inventive portable pump station arrangement.

### Detailed description of preferred embodiments of the invention

The present invention relates specifically to the field of pump arrangements especially configured for pumping water slurry/sludge comprising for instance sand and stone material, such as drilling water in mining/tunneling applications and surface water on construction sites and quarries, i.e. pump arrangements for dewatering applications at production sites.

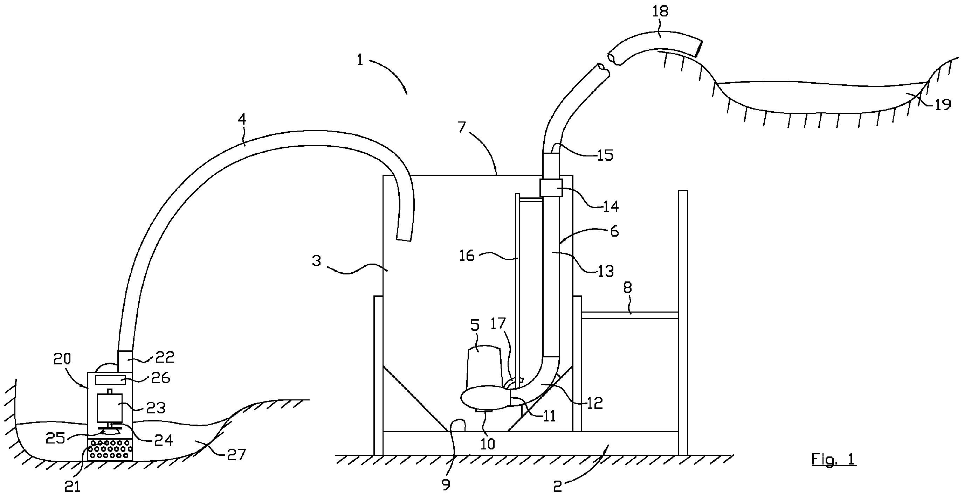

Reference is initially made to figure 1, disclosing a schematic illustration of a portable pump station arrangement, generally designated 1. The portable pump station arrangement 1 is configured for collecting/receiving and transporting/pumping water slurry.

The portable pump station arrangement 1 comprises a chassis 2 configured to bear against the ground, a tank 3 supported by the chassis 2 and configured to hold liquid, an inlet conduit 4 connected to the tank 3 and configured to lead water slurry into the tank 3, at least one discharge pump 5 arranged in the tank 3 and configured to transport the water slurry away from the tank 3, and an outlet pipe system 6 connected to the at least one discharge pump 5 and configured to lead the water slurry away from the tank 3. The actual pump station, generally designated 7, is constituted by the chassis 2, the tank 3, the at least one discharge pump 5 and the outlet pipe system 6.

The pump station 7 is preferably configured to be moved by means of forklifts, in the bucket of a front end loader, hanging in straps, etc. In order to be truly portable, the vertical height of the chassis 2 and tank 3 is preferably in the range 1,5-3 meters, the width of the chassis 2 and tank 3 is preferably in the range 1,5-3 meters, and the length of the chassis 2 and the tank 3 is preferably in the range 1,5-4 meters.

The chassis 2, also known as framework, is preferably made of metal, such as steel, in order to withstand rough handling and rough grounds. The chassis 2 is configured to support and protect the tank 3, and comprises preferably a bridge/platform 8 for the operator. The tank 3 is preferably made of fiberglass or plastic in order to minimize the weight, but also metal is conceivable. Thereto, fiberglass and plastic does not corrode.

The tank 3 has an upper portion and a lower portion, which are connected to each other to form the tank 3. It shall be pointed out that the upper portion and/or the lower portion can be constituted by one or more discrete elements/segments joined to each other, and it is also conceivable that the entire tank 3 is made of a single element. Preferably the upper portion has the shape of a cylinder, and preferably the lower portion has a tapering shape from the upper portion towards a bottom surface 9 of the tank 3. The bottom surface 9 is preferably plane/flat and parallel to the underside of the chassis 2.

According to a preferred embodiment the tank 3, preferably the bottom surface 9, comprises a bottom valve configured to empty the tank 3 from its content if needed.

The inlet conduit 4 is connected to the tank 3 meaning that the inlet conduit 4 is arranged in such a way that the water slurry is lead into the tank 3, i.e. the inlet conduit 4 cooperates with the tank 3. Preferably the inlet conduit 4 leads the water slurry from above into the tank 3, by hanging over the upper rim of the tank 3. The inlet conduit 4 can be temporarily fixed to the pump station 7, direct or indirect, in order to secure that the end of the inlet conduit 4 is not removed from the tank 3 by accident. According to the disclosed embodiment, the inlet conduit 4 is constituted by a hose. The inlet conduit 4 can also be constituted by an upwardly open channel (or hose) leading water slurry running from a higher altitude into the tank 3 by means of gravity.

The pump station 7 comprises at least one discharge pump 5, and preferably two discharge pumps in order to manage temporarily increased inflow and also as a backup if one of the discharge pumps malfunction. The discharge pump 5 comprises an impeller rotating in a volute, and is preferably constituted by a centrifugal pump having an axial inlet opening 10, i.e. an inlet, and a radial outlet opening 11, i.e. an outlet. The terms axial and radial are defined in relation to the axis of rotation of the impeller of the centrifugal pump, i.e. in the disclosed embodiment the water slurry is sucked into the discharge pump 5 in the axial/vertical direction and discharged from the discharge pump 5 in the radial/horizontal direction. Thus, the inlet of the discharge pump 5 is open in the axial direction and the outlet is open in the radial direction. The discharge pump 5 is preferably constituted by a wastewater pump. It is also conceivable that the discharge pump 5 is constituted by a slurry pump, a dewatering pump, a sludge pump, etc. It shall be pointed out that in the case the pump station 7 comprises two discharge pumps 5 they can be of different or the same type. The impeller of the discharge pump 5 is preferably a socalled closed impeller having blades connected to an upper cover disc and to a lower cover disc, but it is also conceivable to have a socalled open impeller having blades connected to an upper cover disc, or a semi-open impeller wherein the blades comprises winglets at the lower edges instead of a lower cover disc.

The discharge pump 5 comprises in a conventional way a hydraulic unit having a pump chamber/volute, and comprises a drive unit. The drive unit and the pump chamber are arranged in a pump housing. The drive unit comprises an electric motor arranged in the liquid tight pump housing, and a drive shaft extending from the electric motor. The hydraulic unit comprises an impeller that is arranged in the pump chamber and is connected to and driven in rotation by the drive shaft during operation of the discharge pump 5, wherein liquid is sucked into said inlet 10 and pumped out of said outlet 11 when the discharge pump 5 is active. The pump housing and the impeller, and other essential components, are preferably made of metal, such as aluminum and steel. The electric motor is powered via an electric power cable extending from a power supply, and the discharge pump 5 comprises a liquid tight lead-through receiving the electric power cable.

According to a preferred embodiment the discharge pump 5, more precisely the electric motor, is operatively connected to a control unit, such as an Intelligent Drive comprising a Variable Frequency Drive (VFD). Thus, said discharge pump 5 is configured to be operated at a variable operational speed [rpm], by means of said control unit. The control unit is configured to monitor and control the operational speed of the discharge pump 5. The control unit can be located inside the liquid tight pump housing, i.e. integrated into the pump, or the control unit is an external control unit. The operational speed of the discharge pump 5 is more precisely the rpm of the electric motor and the impeller, and correspond/relate to a control unit output frequency.

The components of the discharge pump 5 are usually cold down by means of the liquid/water surrounding the discharge pump 5. The discharge pump 5 is designed and configured to be able to operate in a submerged configuration/position, i.e. during operation be located entirely under the liquid surface. However, it shall be realized that the submersible discharge pump 5 during operation must not be entirely located under the liquid surface but may continuously or occasionally be partly located above the liquid surface.

The discharge pump 5 can preferably be operated in different drive modes, such as continuous operation using varying operational speed in order to save energy and/or reduce wear, or constant operation at rated power, or ON/OFF operation between a pump start liquid level and a pump stop liquid level.

The portable pump station arrangement 1 is configured to collect and transport at least water slurry having a density equal to or greater than 1 kg/dm³ and equal to or less than 1,3 kg/dm³, and wherein the elements of the sand/stone material has a diameter equal to or less than 20 millimeters, i.e. stones that can pass through a screen/sieve having a hole diameter of 20 millimeters.

The outlet pipe system 6 of the pump station 7 comprises, for each discharge pump 5, preferably a discharge connection 12 and an outlet pipe 13. The discharge connection 12 and the outlet pipe 13 are connected to each other and lowered into the tank 3 as a single unit. The outlet pipe system 6 is only fixed/connected to the tank 3 at the upper end of the tank 3, wherein the discharge connection 12 rests against the bottom surface 9 and/or the inside of the lower portion of the tank 3 without being fixed/connected. The outlet pipe 13 preferably comprises a check valve 14 located at the upper end of the tank 3, and the outlet pipe 13 terminates at an outlet opening 15. In the case the pump station 7 comprises two discharge pumps 5 and two outlet pipes 13, the outlet pipes are connected to each other downstream the respective check valve 15.

The outlet pipe system 6, for each discharge pump 5, also comprises a pump guide assembly 16 extending in the vertical direction within the tank 3. The lower end of the pump guide assembly 16 is connected to the discharge connection 12, and the upper end of the pump guide assembly 16 is connected to the outlet pipe 13 at the upper end of the tank 3, preferably below the check valve 14. The discharge pump 5 comprises a bracket 17 configured to interact with the pump guide assembly 16 in order to guide the discharge pump 5 into engagement with the discharge connection 12.

In order to lead the water slurry away from the pump station 7, an outlet hose 18 is releasably connected to the outlet opening 15 of the outlet pipe 13. The outlet hose 18 may extend to another portable pump station 1, to a settling basin 19, to a cavity pit in the gallery, to a vehicle, etc.

In the preferred embodiment disclosed in figure 1, an inlet pump 20 is connected to the inlet conduit 4 and is configured to lift the water slurry from the ground and pump the water slurry into the tank 3 via the inlet conduit 4. Preferably the inlet pump 20 is constituted by a dewatering pump, also known as drainage pump. It is also conceivable that the inlet pump 20 is constituted by a slurry pump, a sludge pump, a wastewater pump, etc.

The inlet pump 20 comprises an inlet 21 and a pump outlet 22. The inlet pump 20 comprises in a conventional way a hydraulic unit having a pump chamber/volute, and comprises a drive unit. The drive unit and the pump chamber are arranged in a pump housing. The drive unit comprises an electric motor 23 arranged in the liquid tight pump housing, and a drive shaft 24 extending from the electric motor 23. The hydraulic unit comprises an impeller 25 that is arranged in the pump chamber and is connected to and driven in rotation by the drive shaft 24 during operation of the inlet pump 20, wherein liquid is sucked into said inlet 21 and pumped out of said outlet 22 when the inlet pump 20 is active. The pump housing and the impeller 25, and other essential components, are preferably made of metal, such as aluminum and steel. The electric motor 23 is powered via an electric power cable extending from a power supply, and the inlet pump 20 comprises a liquid tight lead-through receiving the electric power cable. According to an alternative embodiment, the drive unit comprises an internal combustion engine and a suitable gear box arrangement, wherein the drive shaft is driven in rotation by the internal combustion engine via said gear box arrangement. Drainage pump arrangements comprising internal combustion engines are conventionally used in dry installations, i.e. the entire pump is then located above the liquid surface and an inlet pipe extend from the pump inlet into the liquid.

The inlet pump 20, more precisely the electric motor 23, is operatively connected to a control unit 26, such as an Intelligent Drive comprising a Variable Frequency Drive (VFD). Thus, said inlet pump 20 is configured to be operated at a variable operational speed [rpm], by means of said control unit 26. According to the disclosed and preferred embodiment, the control unit is located inside the liquid tight pump housing, i.e. it is preferred that the control unit 26 is integrated into the inlet pump 20. The control unit 26 is configured to monitor and control the operational speed of the inlet pump 20. According to an alternative embodiment the control unit is an external control unit. The operational speed of the inlet pump 2 is more precisely the rpm of the electric motor 23 and the impeller 25, and correspond/relate to a control unit 26 output frequency.

The components of the inlet pump 20 are usually cold down by means of the liquid/water surrounding the inlet pump 20. The inlet pump 20 is designed and configured to be able to operate in a submerged configuration/position, i.e. during operation be located entirely under the liquid surface. However, it shall be realized that the submersible inlet pump 20 during operation must not be entirely located under the liquid surface but may continuously or occasionally be partly located above the liquid surface.

The inlet pump 20 is in the disclosed application located in a basin 27 and is intended to transport/pump water slurry, i.e. liquid comprising solid matter, from said basin 27 to the pump station 7. Thereto, it shall be realized that several inlet pumps 20 may be arranged to pump water slurry into the same pump station 7. The basin may be a natural recess/cavity/pit or a prepared recess/cavity/pit.

The inlet pump 20 can preferably be operated in different drive modes, such as continuous operation using varying operational speed in order to save energy and/or reduce wear, or constant operation at rated power, or ON/OFF operation between a pump start liquid level and a pump stop liquid level. Thereto, it is an explicit requirement from the operators/customers in a mine that the inlet pump 20 shall always be operating/running, since a standstill in the mine due to a flooded horizontal gallery is extremely costly and thus the operators/costumers are more willing to have excessive wear on the inlet pumps than a stop in the production.

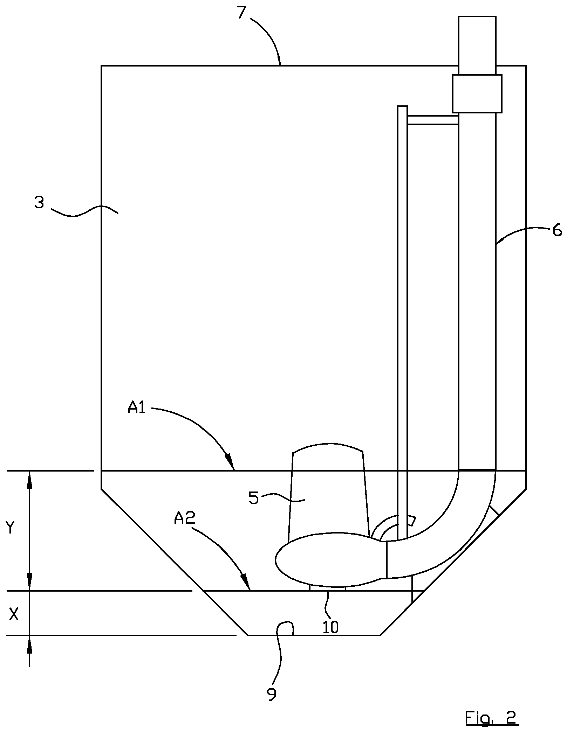

Reference is now also made to figure 2, disclosing the pump station 7 of the portable pump station arrangement 1.

It is essential for the present invention to be able to remove all water slurry entering the tank 3. In order to secure this, according to the invention, the tank 3 has a first cross sectional area (A1) and on a level with an inlet opening 10 of the at least one discharge pump 5 has a second cross sectional area (A2), wherein the ratio A1:A2 is equal to or greater than 1,4 and equal to or less than 20 and the vertical distance (Y) between the first cross sectional area (A1) and the second cross sectional area (A2) is equal to or greater than 0,05*C/π and equal to or less than 0,10*C/π, wherein C is equal to the circumference of the tank (3) at the first cross sectional area (A1). The tapering of the tank 3 can be symmetrical or asymmetrical. Preferably the tapering of the lower portion of the tank 3 continues also below the inlet opening 10 of the discharge pump 5 downwards to the bottom surface 9. Preferably, the ratio A1:A2 is equal to or greater than 3 and equal to or less than 10. The ratio stipulates the tapering/inclination of the tank walls shall not be too steep or too moderate. A too steep tapering/inclination the solid matter will settle on the tank 3 walls and not glide downwards to the bottom surface 9, and a too moderate tapering/inclination the solid matter will settle on the bottom surface 9 too far away from the discharge pump 5 inlet opening. The mentioned ratios are optimal.

Thereto, in order to further secure removal/transportation of the water slurry away from the tank 3, It is preferred that the vertical distance (Y) between the first cross sectional area (A1) and the second cross sectional area (A2) is equal to or greater than 0,07*C/π and equal to or less than 0,08*C/π. The distance stipulates the tapering/inclination of the tank walls shall not be too steep or too moderate. A too steep tapering/inclination the solid matter will settle on the tank 3 walls and not glide downwards to the bottom surface 9, and a too moderate tapering/inclination the solid matter will settle on the bottom surface 9 too far away from the discharge pump 5 inlet opening. The mentioned ratios are optimal.

The inlet opening 10 of the discharge pump 5 is located straight above a bottom surface 9 of the tank 3. In order to further secure removal/transportation of the water slurry away from the tank 3, the vertical distance (X) between the inlet opening 10 of the discharge pump 5 and the bottom surface 9 of the tank 3 is equal to or greater than 30 millimeters and equal to or less than 250 millimeters. Preferably the vertical distance (X) between the inlet opening 10 of the discharge pump 5 and the bottom surface 9 of the tank 3 is equal to or greater than 50 millimeters and equal to or less than 150 millimeters. The distance shall not be too big or too small. A too big vertical/axial distance the solid matter will not be affected by the pumped flow, and a too small distance the gap will become a bottleneck and there is a risk that the solid matter will block the inlet opening 10. The mentioned distances are optimal.

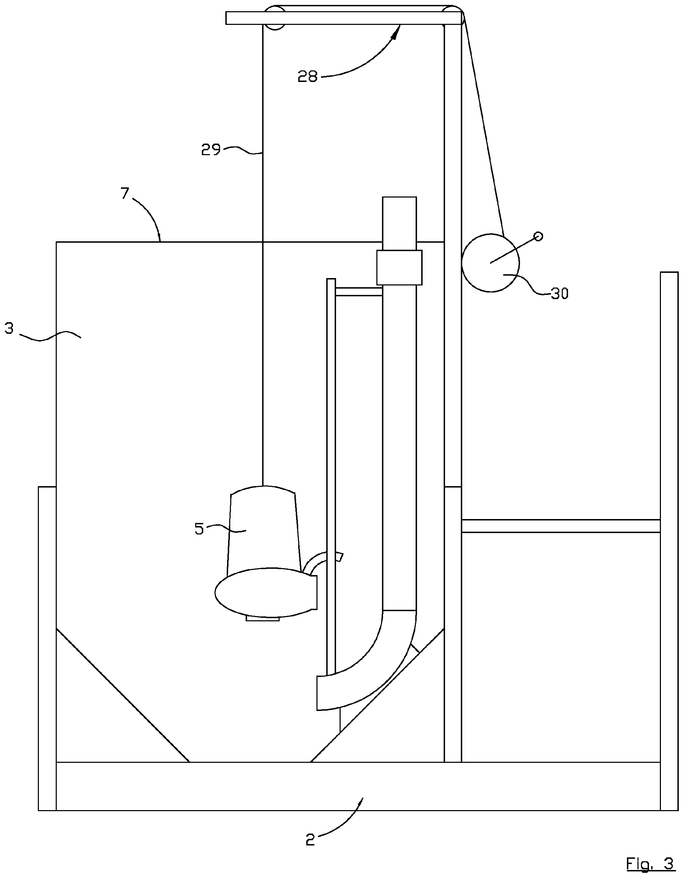

Reference is now made to figure 3. In the disclosed embodiment, the pump station 7 comprises a crane 28, wherein the discharge pump 5 can be lowered and hoisted in the tank 3. The crane 28 is configured to turn about a vertical axis such that the discharge pump 5 can be moved over the upper rim of the tank 3. Preferably also the outlet pipe system 6 can be lowered and hoisted in the tank 3 by means of the crane 28. The wire 29 of the crane 28 can be manually operated using a winch 30 or be operated using an electric motor.

### Feasible modifications of the Invention

The invention is not limited only to the embodiments described above and shown in the drawings, which primarily have an illustrative and exemplifying purpose. This patent application is intended to cover all adjustments and variants of the preferred embodiments described herein, thus the present invention is defined by the wording of the appended claims and thus, the equipment may be modified in all kinds of ways within the scope of the appended claims.

It shall also be pointed out that all information about/concerning terms such as above, under, upper, lower, etc., shall be interpreted/read having the equipment oriented according to the figures, having the drawings oriented such that the references can be properly read. Thus, such terms only indicates mutual relations in the shown embodiments, which relations may be changed if the inventive equipment is provided with another structure/design.

It shall also be pointed out that even thus it is not explicitly stated that features from a specific embodiment may be combined with features from another embodiment, the combination shall be considered obvious, if the combination is possible.

## Claims

1. A portable pump station arrangement (1) for collecting and transporting water slurry, the portable pump station arrangement (1) comprising:
- a chassis (2) configured to bear against the ground,
- a tank (3) supported by the chassis (2),
- an inlet conduit (4) connected to the tank (3) and configured to lead water slurry into the tank (3),
- at least one discharge pump (5) arranged in the tank (3) and configured to transport the water slurry away from the tank (3), and
- an outlet pipe system (6) connected to the at least one discharge pump (5) and configured to lead the water slurry away from the tank (3),
the portable pump station arrangement (1) being **characterized in that** the tank (3) has a first cross sectional area (A1) and that the tank (3) on a level with an inlet opening (10) of the at least one discharge pump (5) has a second cross sectional area (A2), wherein the ratio A1:A2 is equal to or greater than 1,4 and equal to or less than 20, and **in that** the vertical distance (Y) between the first cross sectional area (A1) and the second cross sectional area (A2) is equal to or greater than 0,05*C/π and equal to or less than 0,10*C/π, wherein C is equal to the circumference of the tank (3) at the first cross sectional area (A1).

2. The portable pump station arrangement (1) according to claim 1, wherein the ratio A1:A2 is equal to or greater than 3.

3. The portable pump station arrangement (1) according to claim 1 or 2, wherein the ratio A1:A2 is equal to or less than 10.

4. The portable pump station arrangement (1) according to any of claims 1-3, wherein an inlet pump (20) is connected to the inlet conduit (4) and is configured to lift the water slurry from the ground and pump the water slurry into the tank (3) via the inlet conduit (4).

5. The portable pump station arrangement (1) according to claim 4, wherein the inlet pump (20) is constituted by a dewatering pump.

6. The portable pump station arrangement (1) according to any preceding claim, wherein the portable pump station arrangement (1) comprises two discharge pumps (5) connected to the outlet pipe system (6).

7. The portable pump station arrangement (1) according to any preceding claim, wherein an inlet opening (10) of the at least one discharge pump (5) is located straight above a bottom surface (9) of the tank (3).

8. The portable pump station arrangement (1) according to claim 7, wherein the vertical distance (X) between the inlet opening (10) of the at least one discharge pump (5) and the bottom surface (9) of the tank (3) is equal to or greater than 30 millimeters, preferably equal to or greater than 50 millimeters.

9. The portable pump station arrangement (1) according to claim 7 or 8, wherein the vertical distance (X) between an inlet opening (10) of the at least one discharge pump (5) and the bottom surface (9) of the tank (3) is equal to or less than 250 millimeters, preferably equal to or less than 150 millimeters.

10. The portable pump station arrangement (1) according to any preceding claim, wherein the at least one discharge pump (5) is constituted by a centrifugal pump having an axial inlet opening (10) and a radial outlet opening (11).

11. The portable pump station arrangement (1) according to claim 10, wherein the at least one discharge pump (5) is constituted by a wastewater pump.

12. The portable pump station arrangement (1) according to any preceding claim, wherein the tank (3) has an upper portion having the shape of a cylinder, and a lower portion having a tapering shape from the upper portion towards the bottom surface (9) of the tank (3).

13. The portable pump station arrangement (1) according to any preceding claim, wherein the outlet piping system (6) comprises a discharge connection (12), and an outlet pipe (13) extending from the discharge connection (12) and terminates at an outlet opening (15).

14. The portable pump station arrangement (1) according to claim 13, wherein the portable pump station arrangement (1) comprises a pump guide assembly (16) extending in the vertical direction within the tank (3), wherein the lower end of the pump guide assembly (16) is connected to the discharge connection (12).

15. The portable pump station arrangement (1) according to claim 13, wherein an outlet hose (18) is connected to the outlet opening (15) of the outlet pipe (13).
